(19) Europäisches Patentamt
European Patent Office
Office européen des brevets

(11) EP 4 584 317 B1

(12) **EUROPEAN PATENT SPECIFICATION**

(45) Date of publication and mention of the grant of the patent:
**03.06.2026 Bulletin 2026/23**

(21) Application number: **23768254.7**

(22) Date of filing: **07.09.2023**

(51) International Patent Classification (IPC):
***C08G 63/91*** *(2006.01)* ***C08L 67/06*** *(2006.01)*

(52) Cooperative Patent Classification (CPC):
(C-Sets available)
**C08G 63/54; C08F 283/01; C08J 5/244;**
C08J 2367/00 (Cont.)

(86) International application number:
**PCT/EP2023/074568**

(87) International publication number:
**WO 2024/052456 (14.03.2024 Gazette 2024/11)**

(54) **ETHYLENICALLY UNSATURATED POLYESTER RESIN COMPOSITION**

ÄTHYLENISCH UNGESÄTTIGTE POLYESTERHARZZUSAMMENSETZUNG

COMPOSITION DE RÉSINE DE POLYESTER À INSATURATION ÉTHYLÉNIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.09.2022 EP 22194299**
**16.12.2022 EP 22214107**

(43) Date of publication of application:
**16.07.2025 Bulletin 2025/29**

(73) Proprietor: **BASF SE**
**67056 Ludwigshafen am Rhein (DE)**

(72) Inventors:
- **LORENZ, Reinhard**
  **48149 Münster (DE)**
- **WYLEZEK, Maciej Aleksander**
  **48565 Steinfurt (DE)**
- **ADERMANN, Torben**
  **67056 Ludwigshafen am Rhein (DE)**
- **D'ANDOLA, Giovanni**
  **67056 Ludwigshafen am Rhein (DE)**
- **GLAESER, Kristin**
  **48149 Münster (DE)**
- **KRENZ, Irina**
  **48149 Münster (DE)**
- **KALINKIN, Chris Rick**
  **48149 Münster (DE)**
- **THOMANN, Felix**
  **48149 Münster (DE)**

(74) Representative: **BASF IP Association**
**BASF SE**
**GBI - Z078**
**67056 Ludwigshafen (DE)**

(56) References cited:
**EP-A1- 3 858 634 EP-B1- 1 131 372**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 283/01, C08F 226/02**

## Description

The present invention relates to an ethylenically unsaturated polyester resin composition and the use of the composition in specific applications.

Unsaturated polyester resins (UPR) are thermosetting polymers and are used in a wide variety of applications, for example as matrix materials in composite materials. Unsaturated polyesters are obtained via condensation reaction of polyols (polyhydric alcohols) with unsaturated diprotic acids.

EP 3 626 759 A1 describes high-temperature unsaturated polyester (UP) resins based on cyclic and non-cyclic raw materials and describes in detail the application of such resins in different fields.

Unsaturated polyester resins are suitably provided in malleable or liquid form. In order to optimize rheology and thereby improve workability of the resins, at least one reactive diluent (thinner) is usually added to the resin. During the curing of the resin, the reactive diluent copolymerizes with the resin.

Reactive diluents are typically low-viscosity, mono-, bi- or polyfunctional monomers or oligomers. Examples of frequently used reactive diluents include styrene and styrene derivatives, vinyl ethers, acrylates and methacrylates. Most commonly, styrene is used as a reactive diluent for unsaturated polyester resins, as described in EP 1 131 372 B1.

However, the use of the common reactive diluents has several disadvantages. For example, styrene derivatives may yield a high amount of residual monomers, vinyl ethers are susceptible to hydrolysis, methacrylates exhibit relatively low reactivity, and acrylates may induce tackiness in the obtained polymers. Moreover, in particular the use of styrene is considered problematic due to odor issues and concerns over its toxicity.

There is a need for further unsaturated polyester resin compositions obtained from reactive diluents which address at least some of the above-mentioned disadvantages. The amount of reactive thinner should be as low possible. Moreover, it is desired to provide unsaturated polyesters based on biogenic raw materials.

The present invention provides an ethylenically unsaturated polyester resin composition comprising

(i) an ethylenically unsaturated polyester resin obtainable by reacting

(i-a) at least one unsaturated dicarboxylic acid, or an ester or an anhydride thereof, wherein the unsaturated dicarboxylic acid comprises at least one ethylenically unsaturated dicarboxylic acid; and

(i-b) at least one polyol; and

(ii) a reactive diluent, which is an N-vinyloxazolidinone of formula (I)

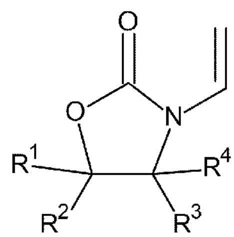

(I)

in which $R^1$, $R^2$, $R^3$ and $R^4$ are independently from one another selected from a hydrogen atom and an organic moiety comprising 1 to 10 carbon atoms;

wherein the ethylenically unsaturated polyester resin (i) is characterized by a Hansen solubility parameter $\delta_p$ of at least 5.5 $MPa^{1/2}$.

It was found that N-vinyloxazolidinones of formula (I) are especially suitable for solubilizing ethylenically unsaturated polyester resins (i) having a Hansen solubility parameter $\delta_p$ of at least 5.5 $MPa^{1/2}$. The Hansen solubility parameter $\delta_p$ indicates the energy from dipolar intermolecular force between molecules. Moreover, and unlike for example styrene, the N-vinyloxazolidinones of formula (I) generally exhibit low toxicity and are virtually odorless, in particular 5-methyl-3-vinyl-oxazolidin-2-one.

Without wishing to be bound by theory, it is assumed that the high polarity of the N-vinyloxazolidinones of formula (I) renders these compounds highly compatible with relatively polar unsaturated polyester resins, which is reflected in a relatively high Hansen solubility parameter $\delta_p$ of these unsaturated polyester resins.

The definition and calculation of solubility parameters in the three dimensional Hansen solubility space are described in C. M. Hansen: "The Three Dimensional Solubility parameter and Solvent Diffusion Coefficient - Their Importance in Surface Coating Formulation", Danish Technical Press, Copenhagen, 1967.

As mentioned above, $\delta_p$ denotes the energy from dipolar intermolecular force between molecules, while $\delta_d$ denotes the energy from dispersion forces between molecules, and $\delta_h$ denotes the energy from hydrogen bonds between molecules. The unit of the Hansen solubility parameters of the parameters is $MPa^{1/2}$.

Hansen solubility parameters for many compounds are tabulated in standard works, such as "Hansen Solubility Parameters: A User's Handbook", C. M. Hansen, 2007, 2nd Edition, CRC. Well-known modeling software, such as HSPIP 3.1.25 (3rd Edition), developed and distributed by C. M. Hansen, or COSMOquick 2021 can also be used to calculate Hansen solubility parameters based on the chemical structure of the compound. The Hansen solubility parameters are calculated assuming room temperature, approximately 25 °C. Herein, the Hansen solubility parameters, in particular $\delta_p$, are calculated according to the method described for the working examples below.

If the Hansen solubility parameter $\delta_p$ is below the claimed value, the solubility of the ethylenically unsaturated polyester resins (i) in the N-vinyloxazolidinones of formula (I) may be insufficient, and the advantageous properties of the reactive diluent (ii) are less pronounced. It was moreover found that the known reactive thinner styrene does not reliably provide sufficient solubility for ethylenically unsaturated polyester resins (i) having a Hansen solubility parameter $\delta_p$ of at least 5.5 $MPa^{1/2}$.

In a preferred embodiment, the ethylenically unsaturated polyester resin (i) is characterized by a Hansen solubility parameter $\delta_p$ of at least 5.7 $MPa^{1/2}$, such as at least 6.0 $MPa^{1/2}$, or at least 6.3 $MPa^{1/2}$, more preferably at least 6.5 $MPa^{1/2}$, in particular at least 7.0 $MPa^{1/2}$, most preferably at least 8.0 $MPa^{1/2}$. The Hansen solubility parameter $\delta_p$ is preferably at most 16 $MPa^{1/2}$, more preferably at most 12 $MPa^{1/2}$, most preferably at most 8.5 $MPa^{1/2}$.

In a further embodiment, the ethylenically unsaturated polyester resin (i) is characterized by a Hansen solubility parameter $\delta_d$ of at least 15.0 $MPa^{1/2}$, preferably at least 17.0 $MPa^{1/2}$, more preferably at least 17.5 $MPa^{1/2}$, most preferably at least 18.0 $MPa^{1/2}$, such as at least 18.5 $MPa^{1/2}$. The Hansen solubility parameter $\delta_d$ is preferably at most 22.0 $MPa^{1/2}$, more preferably at most 20.5 $MPa^{1/2}$, most preferably at most 19.5 $MPa^{1/2}$.

In a further embodiment, the ethylenically unsaturated polyester resin (i) is characterized by a Hansen solubility parameter $\delta_h$ of at least 15.0 $MPa^{1/2}$, preferably at least 15.5 $MPa^{1/2}$, more preferably at least 16.0 $MPa^{1/2}$, most preferably at least 17.0 $MPa^{1/2}$. The Hansen solubility parameter $\delta_h$ is preferably at most 30.0 $MPa^{1/2}$, more preferably at most 24.0 $MPa^{1/2}$, most preferably at most 18.0 $MPa^{1/2}$.

In one embodiment, the ethylenically unsaturated polyester resin (i) is characterized by

- a Hansen solubility parameter $\delta_p$ of at least 5.5 $MPa^{1/2}$, preferably at least 5.7 $MPa^{1/2}$, such as at least 6.0 $MPa^{1/2}$, or at least 6.3 $MPa^{1/2}$, more preferably at least 6.5 $MPa^{1/2}$, in particular at least 7.0 $MPa^{1/2}$, most preferably at least 8.0 $MPa^{1/2}$, and

- a Hansen solubility parameter $\delta_d$ of at least 15.0 $MPa^{1/2}$, preferably at least 17.0 $MPa^{1/2}$, more preferably at least 17.5 $MPa^{1/2}$, most preferably at least 18.0 $MPa^{1/2}$, such as at least 18.5 $MPa^{1/2}$.

The above-mentioned upper limits are preferred.

In a further embodiment, the ethylenically unsaturated polyester resin (i) is characterized by

- a Hansen solubility parameter $\delta_p$ of at least 5.5 $MPa^{1/2}$, preferably at least 5.7 $MPa^{1/2}$, such as at least 6.0 $MPa^{1/2}$, or at least 6.3 $MPa^{1/2}$, more preferably at least 6.5 $MPa^{1/2}$, in particular at least 7.0 $MPa^{1/2}$, most preferably at least 8.0 $MPa^{1/2}$;

- a Hansen solubility parameter $\delta_d$ of at least 15.0 $MPa^{1/2}$, preferably at least 17.0 $MPa^{1/2}$, more preferably at least 17.5 $MPa^{1/2}$, most preferably at least 18.0 $MPa^{1/2}$, such as at least 18.5 $MPa^{1/2}$; and

- a Hansen solubility parameter $\delta_h$ of at least 15.0 $MPa^{1/2}$, preferably at least 15.5 $MPa^{1/2}$, more preferably at least 16.0 $MPa^{1/2}$, most preferably at least 17.0 $MPa^{1/2}$.

The above-mentioned upper limits are preferred.

The parameters $\delta_p$, $\delta_d$ and $\delta_h$ can be considered as coordinates for a point in three dimensions also known as the Hansen space. The closer two molecules are in Hansen space, the more likely they are to dissolve into each other. In order to determine whether the parameters of two molecules, typically a solvent and a polymer, are within range, an interaction radius (or $R_0$ value) is attributed, generally to the substance to be dissolved. The $R_0$ value determines the radius of the sphere in Hansen space. All suitable solvents are located within the sphere, while unsuitable solvents are located outside the sphere.

The interaction radius $R_0$ is defined by the greatest distance $R_a$ value at which a substance is solubilized. The distance $R_a$ is calculated from the Hansen solubility parameters of the substances under consideration. Subsequently, experimental solubility tests are performed. The results are correlated with the theoretical calculations of the $R_a$

parameters. The value of $R_a$ may be calculated by the following formula:

$$Ra = \sqrt{4 \cdot (\delta_{D1} - \delta_{D2})^2 + (\delta_{P1} - \delta_{P2})^2 + (\delta_{H1} - \delta_{H2})^2}$$

A detailed discussion on how to determine $R_a$ and $R_0$ values may be found in "Hansen Solubility Parameters: A User's Handbook", C. M. Hansen, 2007, 2nd Edition, CRC.

From the $R_a$ and the $R_0$ value, the relative energy density (RED) is calculated according to RED = $R_a/R_0$. If the RED value is less than 1, the substances will dissolve. If the RED value is 1, the substances will partially dissolve. If the RED value is greater than 1, the substances will not dissolve.

For example, styrene has an experimentally determined $R_0$ value of 12.65. This means that if the $R_a$ value calculated from the Hansen parameters of styrene and, e.g., a specific polyester resin, is above 12.65, the RED value will be above 1, and the substance is insoluble in styrene.

In one embodiment, the ethylenically unsaturated polyester resin (i) is characterized by an $R_a$ value of greater than 12.65, preferably greater than 12.70 or greater than 12.80, relative to styrene.

If the Hansen solubility parameter values of individual substances are known, the Hansen solubility parameter values of mixtures can be calculated. Each parameter is calculated individually by adding the parameters of both substances according to the volume ratio:

$$\delta_M = \varphi_1 * \delta_1 + \varphi_2 * \delta_2$$

wherein $\varphi_1$ is the volume fraction of substance 1, $\varphi_2$ is the volume fraction of substance 2, $\delta_1$ is the Hansen solubility parameter ($\delta_d$, $\delta_p$ or $\delta_h$) of substance 1 and $\delta_2$ is the Hansen solubility parameter ($\delta_d$, $\delta_p$ or $\delta_h$) of substance 2. There is an optimal ratio of solvents (with the smallest distance $R_a$) for a given substance. Even two (or more) substances which are typically unsuitable for solving a compound can become suitable solvents in certain ratios, since the mixture can lie within the solubility sphere $R_0$.

In the N-vinyloxazolidinone of formula (I), moieties $R^1$, $R^2$, $R^3$ and $R^4$ are independently from one another selected from a hydrogen atom and an organic moiety comprising 1 to 10 carbon atoms. The organic moiety preferably comprises 1 to 8 carbon atoms, more preferably 1 to 6 carbon atoms, most preferably 1 to 4 carbon atoms, such as 1 to 3 carbon atoms. The organic moiety may comprise heteroatoms, such as oxygen, nitrogen and/or sulfur, in particular oxygen and/or nitrogen.

The organic moiety is preferably selected from a $C_1$-$C_{10}$ alkyl group and a $C_1$-$C_{10}$ alkoxy group, more preferably from a $C_1$-$C_4$ alkyl group and a $C_1$-$C_4$ alkoxy group, most preferably a $C_1$-$C_4$ alkyl group. Preferably, the organic moiety is selected from methyl, ethyl and propyl, more preferably from methyl and ethyl, most preferably methyl.

In a preferred embodiment, the N-vinyloxazolidinone of formula (I) is characterized in that

- at least two of $R^1$, $R^2$, $R^3$ and $R^4$ are a hydrogen atom, for example each of $R^1$, $R^2$, $R^3$ and $R^4$ is a hydrogen atom; or
- R' is a $C_1$-$C_4$ alkyl group, preferably methyl, and $R^2$, $R^3$ and $R^4$ are a hydrogen atom; or
- $R^4$ is a $C_1$-$C_4$ alkyl group, preferably methyl, and $R^1$, $R^2$ and $R^3$ are a hydrogen atom; or
- $R^1$ and $R^2$ are a hydrogen atom and $R^3$ and $R^4$ are a $C_1$-$C_4$ alkyl group, preferably methyl.

The synthesis of the N-vinyloxazolidinone compounds of formula (I) is well-known in the art. For example, N-vinyloxazolidinone compounds may be produced by pyrolyzing N-(1-hydroxyalkyl)-2-oxazolidinone in accordance with US 4,831,153. In particular, N-vinyloxazolidinone compounds may be synthesized by reacting acetylene with oxazolidinone compounds (so-called "Reppe Chemistry").

Preferred N-vinyloxazolidinones of formula (I) include 3-vinyloxazolidin-2-one (NVO) and vinyl methyl oxazolidinones such as 4-methyl-3-vinyl-oxazolidin-2-one (4-NVMO) and 5-methyl-3-vinyl-oxazolidin-2-one (5-NVMO), in particular 5-methyl-3-vinyl-oxazolidin-2-one.

Vinyl methyl oxazolidinones are commercially available. For example, VMOX® from BASF SE comprises primarily 5-methyl-3-vinyl-oxazolidin-2-one, and further 4-methyl-3-vinyl-oxazolidin-2-one. In one embodiment, the vinyl methyl oxazolidinone comprises 5-methyl-3-vinyl-oxazolidin-2-one and at most 20 wt.-%, preferably at most 10 wt.-%, more preferably at most 5 wt.-% of 4-methyl-3-vinyl-oxazolidin-2-one, based on the total amount of vinyl methyl oxazolidinone, such as at most 1 wt.-% or at most 0.05 wt.-% of 4-methyl-3-vinyl-oxazolidin-2-one.

Preferably, the reactive diluent (ii) comprises a total amount of 3-vinyloxazolidin-2-one, 5-methyl-3-vinyl-oxazolidin-2-one and 4-methyl-3-vinyl-oxazolidin-2-one of at least 90 mol-%, more preferably at least 95 mol-%, most

preferably at least 98 mol-%, relative to the total amount of the reactive diluent (ii). In a particularly preferred embodiment, the reactive diluent (ii) comprises an amount of 5-methyl-3-vinyl-oxazolidin-2-one and 4-methyl-3-vinyl-oxazolidin-2-one of at least 90 mol-%, more preferably at least 95 mol-%, most preferably at least 98 mol-%, relative to the total amount of the reactive diluent (ii).

The ethylenically unsaturated polyester resin bears ethylenically unsaturated double bonds in its backbone which stem from the polymerized ethylenically unsaturated dicarboxylic acids of the component (i-a).

In this context, the term "ethylenically unsaturated" refers to a moiety which bears an olefinic C=C-double bond which is not part of an aromatic ring and thus is susceptible to a radical polymerization. Typically, the ethylenically unsaturated double bond is present as a vinyl (-CH=CH-) double bond or a vinylidene ($>C=CH_2$) double bond.

The ethylenically unsaturated polyester resin is obtainable by reacting (i-a) at least one unsaturated dicarboxylic acid, or an ester or an anhydride thereof, wherein the unsaturated dicarboxylic acid comprises at least one ethylenically unsaturated dicarboxylic acid; and (i-b) at least one polyol. Optionally, the monomers for forming the ethylenically unsaturated polyester resin may comprise a saturated dicarboxylic acid or an ester thereof.

The term "ester" in the context of unsaturated dicarboxylic acids and saturated dicarboxylic acids may be any ester suitable for a polyester forming reaction. Typically the term "ester" means an alkyl ester, in particular a $C_1$-$C_4$-alkyl ester and especially a methyl or ethyl ester.

The unsaturated dicarboxylic acid comprises at least one ethylenically unsaturated dicarboxylic acid, which means that it has at least one ethylenically unsaturated double bond as described herein. The unsaturated dicarboxylic acid may also be a combination of at least one ethylenically unsaturated dicarboxylic acid with one or more aromatic dicarboxylic acids. The unsaturated dicarboxylic acid preferably comprises at least 50 mol-%, in particular at least 80 mol-% of at least one ethylenically unsaturated dicarboxylic acid, based on the total amount of unsaturated dicarboxylic acids.

The skilled person will readily appreciate that in the formation of the ethylenically unsaturated polyester any dicarboxylic acid may also be used in the form of its ester or its anhydride.

The ethylenically unsaturated dicarboxylic acid comprises two carboxyl groups and at least one ethylenically unsaturated moiety, i.e. a moiety which bears an olefinic double bond that is not part of an aromatic ring and thus is susceptible to a radical polymerization. Typically, the ethylenically unsaturated double bond of the ethylenically unsaturated dicarboxylic acid is present as a vinyl (-CH=CH-) double bond or a vinylidene ($>C=CH_2$) double bond. The ethylenically unsaturated dicarboxylic acid may be straight-chained or branched. The ethylenically unsaturated dicarboxylic acid preferably comprises 4 to 8 carbon atoms, more preferably 4 to 7 carbon atoms, most preferably 4 or 5 carbon atoms.

Aromatic dicarboxylic acids suitable in combination with the at least one ethylenically unsaturated dicarboxylic acid preferably comprise 6 to 9, more preferably 6 to 8, most preferably 8 carbon atoms. Suitable aromatic dicarboxylic acids include phthalic acid, isophthalic acid and terephthalic acid.

The compound (i-a) is preferably selected from maleic acid, maleic anhydride, fumaric acid, fumaric acid dimethyl ester, itaconic acid, itaconic acid dimethyl ester, mesaconic acid, citraconic acid, and tetrahydrophthalic anhydride, or a combination of at least one of said compounds with at least one compound selected from phthalic acid, phthalic anhydride, isophthalic acid, terephthalic acid, dimethylterephthalate, 2,5-furanedicarboxylic acid and 2,5-furanedicarboxylic-dimethylester. The compound (i-a) is more preferably selected from maleic acid, maleic anhydride, fumaric acid, itaconic acid and tetrahydrophthalic anhydride, most preferably from fumaric acid and maleic anhydride.

Suitable saturated dicarboxylic acids are in particular aliphatic dicarboxylic acids, typically having 4 to 14 carbon atoms, such as succinic acid, glutaric acid, adipic acid, pimelic acid, suberic acid, azelaic acid, sebacinic acid and brassylic acid. Suitable saturated dicarboxylic acids also include cycloaliphatic dicarboxylic acids, typically having 6 to 14 carbon atoms, such as 1,2-, 1,3-, or 1,4-cyclohexane-dicarboxylic acid. Generally, the amount of saturated dicarboxylic acid will not exceed 50 mol-% of the total amount of dicarboxylic acids used in the reaction for forming the ethylenically unsaturated polyester, and preferably not exceed 20 mol-%.

The polyol (i-b) is an organic compound comprising multiple hydroxyl groups. Preferably, the polyol (i-b) comprises 2 to 5 hydroxyl groups, more preferably 2 or 3 hydroxyl groups, most preferably 2 hydroxyl groups. The polyol (i-b) may be straight-chained or branched, preferably branched. The polyol (i-b) may be saturated or unsaturated.

Suitable polyols include aliphatic polyols, such as glycols, i.e., aliphatic diols, like ethylene glycol, propylene glycol, diethylene glycol, 1,3-butanediol, 1,4-butanediol, 1,3-propanediol, dipropylene glycol and neopentyl glycol; triols such as glycerine; and aliphatic sugar alcohols such as sorbitol, xylitol and erythritol; as well as heterocyclic polyols, in particular heterocyclic polyols comprising at least one ring oxygen atom, such as maltitol or isosorbide. Glycols and heterocyclic polyols are particularly preferred.

An especially preferred polyol is isosorbide. Preferably, the polyol (i-b) comprises a total amount of isosorbide of at least 30 mol-%, more preferably at least 40 mol-%, most preferably at least 70 mol-%, such as at least 90 mol-% or at least 99 mol-%, relative to the total amount of the polyol (i-b).

The ethylenically unsaturated polyester resin (i) is preferably obtainable by reacting compounds (i-a) and (i-b) in a molar ratio in the range of 1.2 : 1 to 1 : 1.2, more preferably 1.1 : 1 to 1: 1.1, most preferably 1.05 : 1 to 1 : 1.05.

The ethylenically unsaturated polyester resin (i) preferably has a number average molecular weight in the range of 500 to 10,000 g/mol, as determined by gel permeation chromatography, more preferably 800 to 8,000 g/mol, most preferably 1,000 to 5,000 g/mol.

The ethylenically unsaturated polyester resin (i) preferably has an acid value in the range of 5 to 80 mg KOH/g, more preferably 10 to 65 mg KOH/g, most preferably 15 to 55 mg KOH/g.

The acid value (neutralization number) is the mass of potassium hydroxide (KOH) in milligrams required to neutralize one gram of the ethylenically unsaturated resin. The acid value indicates the number of carboxylic acid groups per gram of compound and may be determined via DIN EN ISO 2114.

In a further embodiment, the ethylenically unsaturated resin (i) has an ethylene group density in the range of 1.0 to 7.5 mol/kg, in particular in the range of 2.0 to 7.0 mol/kg, such as 2.5 to 6.0 mol/kg. The ethylene group density signifies the molar proportion of ethylene groups per kg of resin. The ethylene group density may be determined via nuclear magnetic resonance (NMR) spectroscopy.

Preferably, the weight ratio of the ethylenically unsaturated resin (i) to the reactive diluent (ii) in the curable resin composition is in the range of 15 : 85 to 85 : 15, more preferably in the range of 25 : 75 to 75 : 25, in particular 30 : 70 to 60 : 40.

The ethylenically unsaturated polyester resin composition of the invention preferably comprises the ethylenically unsaturated polyester resin (i) in an amount of 15 to 85 wt.-% based on the total weight of the ethylenically unsaturated polyester resin composition, more preferably 15 to 75 wt.-%, most preferably 20 to 60 wt.-%.

The ethylenically unsaturated polyester resin composition of the invention preferably comprises the reactive diluent (ii) in an amount of 0.5 to 85 wt.-%, based on the total weight of the ethylenically unsaturated polyester resin composition, for example 3 to 85 wt.-% or 5 to 85 wt.-%, preferably 10 to 80 wt.-%, more preferably 15 to 80 wt.-%, such as 20 to 80 wt.-%, even more preferably 25 to 80 wt.-%, most preferably 40 to 80 wt.-%, for example 50 to 75 wt.-%.

The ethylenically unsaturated polyester resin composition of the invention preferably comprises the ethylenically unsaturated polyester resin (i) and the reactive diluent (ii) in a total amount of 15 to 100 wt.-% based on the total weight of the ethylenically unsaturated polyester resin composition, more preferably 20 to 100 wt.-%, most preferably 20 to 99 wt.-%.

Besides the reactive diluent (ii), the ethylenically unsaturated polyester resin composition of the invention may comprise one or more further reactive diluents selected from styrene and styrene derivatives, epoxides, vinyl ethers, acrylates and methacrylates. In this case, the reactive diluent (ii) acts as a solubility enhancer. Styrene derivatives include 3-methyl styrene, 4-methyl styrene, 4-tert-butyl styrene and alpha-methyl styrene. Suitable acrylates include methyl methacrylate, tert-butyl acrylate, cyclohexyl acrylate, 4-tert-butyl-cyclohexyl acrylate, dimethyl itaconate, methyl cinnamate, ethyl cinnamate, 2-hydroxyethyl methacrylate, 3-hydroxypropyl methacrylate, isobornyl acrylate, isobornyl methacrylate, 1,4-butanediol dimethacrylate, triethyleneglycol dimethylacrylate, and trimethylolpropane trimethacrylate. Suitable vinyl ethers include cyclohexyl vinyl ether, diethyleneglycol divinylether, triethyleneglycol divinyl ether, cyclohexane-1,4-dimethanol divinylether and 1,4-butanediol divinyl ether. Suitable epoxides include 2,2-bis[4-(glycidyloxy)phenyl] propane, bis-[4-(glycidyloxy)-phenyl]methane and 1,4-bis(2,3-epoxypropyloxy)butane.

In order to achieve the high solubilization of the ethylenically unsaturated polyester resin (i), it is preferred that the reactive diluent (ii) is present in an amount of at least 0.5 wt-% relative to the total amount of reactive diluent (ii) and further reactive diluents, more preferably at least 5 wt.-%, most preferably at least 10 wt.-%, such as at least 25 wt.-%, at least 40 wt.-%, at least 50 wt.-%, at least 60 wt.-% or at least 75 wt.-%.

Preferably, the weight ratio of the ethylenically unsaturated resin (i) to the total amount of reactive diluents in the curable resin composition is in the range of 15 : 85 to 85 : 15, more preferably in the range of 25 : 75 to 75 : 25, in particular 30 : 70 to 70 : 30.

In one embodiment, the ethylenically unsaturated polyester resin composition does not comprise a further reactive diluent.

The composition may comprise further components, including stabilizers; inhibitors; further curable compounds differing from the ethylenically unsaturated polyester resin (i); pigments and dyes; fillers; thickening agents; fibers; flame retardants; biocides; thermoplastic shrink control agents; toughening agents; curing agents; waxes and other film forming agents; lubricants; mold release agents; wetting agents; deaeration agents; and/or coupling agents.

In particular, the composition may comprise at least one stabilizer or a mixture of stabilizers. Suitable stabilizers include nitroxyl compounds, such as 1-oxyl-2,2,6,6-tetramethylpiperidine or 4-hydroxy-1-oxyl-2,2,6,6-tetramethylpiperidine. Moreover, phenol derivatives having at least one substituent in the alpha-position to the phenol group are suitable, such as 2,6-di-tert-butyl-4-methylphenol, Irganox® 1330 or Irganox® 3114, and tocopherols. Further suitable stabilizers include aromatic amines and phenylenediamines, hindered amines such as Tinuvin® NOR® 356, Tinuvin® 765, and Tinuvin® 770, imines, sulfonamides, oximes, hydroxylamines, urea derivatives, phosphorus-containing compounds, sulfur-containing compounds such as phenothiazine, complexing agents based on tetraazaannulene (TAA) and/or metal salts. Phosphorus-containing compounds are, for example, triphenylphosphine, triphenylphosphite, hypophosphorous acid, phosphorous acid, trinonyl phosphite, triethyl phosphite and diphenylisopropylphosphine.

Suitably, the ethylenically unsaturated polyester resin composition comprises a total amount of stabilizers in the range of 0.01 to 5 wt.-%, preferably 0.02 to 3_wt.-%, more preferably 0.025 to 2.5 wt.-%, relative to the total amount of the

ethylenically unsaturated polyester resin composition.

Suitable inhibitors include hydroquinone, 2-methylhydroquinone, 2-tertbutyl-hydroquinone, p-benzoquinone, 2-methyl-p-benzoquinone, 2-tert-butyl-p-benzoquinone, 1,4-naphthoquinone, 4-tert-butyl-catechine (TBC), 1,2-dihydroxynaphthalene, 1,4-dihydroxynaphthalene, N-nitroso-N-phenylhydroxylamine ammonium salt and tris(N-nitroso-N-phenylhydroxyl-aminato)aluminium.

Further curable compounds differing from the ethylenically unsaturated polyester resin (i) may be compounds with polymerizable, ethylenically unsaturated groups, for example, vinyl groups, such as vinyl ether, vinyl ester or N-vinyl groups, allyl groups or (meth)acryloyl groups. The expression "(meth)acryloyl group" is understood to refer to an acryloyl group or a methacryloyl group, preferably an acryloyl group. Compounds with at least one (meth)acryloyl group are referred to as (meth)acryloyl compounds. The further curable compounds may be selected from ethylenically unsaturated resins including ethylenically unsaturated polyester resin, a vinyl ester resin, and a urethane (meth)acrylate resin.

Suitable pigments and dyes are materials that change the color of reflected or transmitted light as the result of wavelength-selective absorption. An example of a pigment is titanium dioxide.

Fillers are inert compounds enhancing the volume of the unsaturated polyester resin composition. For every 100 parts by weight of a mixture of unsaturated polyester resin (i) and reactive diluent (ii), there are preferably 20 to 280 parts by weight fillers present in the unsaturated polyester resin composition. An example of a filler is calcium carbonate.

Thickening agents increase the viscosity of the unsaturated polyester resin composition and reduce its tackiness, thus improving the handling of the composition. Examples of thickening agents are isocyanates such as 4,4'-methylene-diphenyl-diisocyanate, magnesium oxide (MgO), Calciumhydroxide ($Ca(OH)_2$) and Calciumoxide (CaO).

Fibers enhance the mechanical properties and mechanical stability of the cured unsaturated polyester resin composition. For every 100 parts by weight of unsaturated polyester resin (i) and reactive diluent (ii), there are preferably 10 to 200 parts by weight of fibers, more preferably 15 to 200 parts by weight of fibers, most preferably 25 to 180 parts by weight of fibers, such as glass fibers, carbon fibers, ceramic fibers, aramid fibers, boron fibers, basalt fibers, steel fibers, natural fibers and/or nylon fibers. Glass fibers are preferred.

Glass fiber is a material consisting of numerous extremely fine fibers of glass and is formed by extruding thin strands of glass, such as silica-based glass. It has been found that using an N-vinyloxazolidinone of formula (I) as a reactive diluent for obtaining cured glass fiber materials increases the impact strength of these materials as compared to known reactive diluents such as styrene.

The glass fibers, as well as the optional further fibers discussed above, may be characterized by their length-to-diameter ratio (aspect ratio). A fiber is understood to be a material having a length-to-diameter ratio of at least 10, in particular at least 20, more particularly at least 50 or at least 100, and also comprise fibers modified, e.g., by spinning. In a preferred embodiment, the fibers have a length-to-diameter ratio in the range of 20 to 100000, preferably 50 to 100000, most preferably 100 to 100000. The length and diameter of fibers may be determined via a suitable microscope.

The length of suitable glass fibers is typically in the range of 1 mm to 1 m, preferably 2 mm to 1m, most preferably 3 mm to 1 m. The diameter of suitable glass fibers is typically in the range of 6 to 25 $\mu$m, preferably 10 to 25 $\mu$m, most preferably 12 to 25 $\mu$m.

The glass fibers may be present in the material as individual glass fibers, as meshes, fabrics, including knitted and woven fabrics, non-crimp fabrics scrims, rovings and the like.

Flame retardants are substances which prevent or slow ignition development. Suitable flame retardants include solid flame retardants such as alumina trihydrate (ATH), magnesium hydroxide ($Mg(OH)_2$) and ammonium polyphosphate (APP). Other suitable flame retardants include triphenylphosphate, resorcinol tetraphenyldiphosphate, bisphenol A tetraphenyldiphosphate, decabromdiphenylethane, ethylene-bis-(tetrabromophthalimide), tris(tribromophenyl)cyanurate, and/or dodecachloropentacyclo-octadecadiene (Dechlorane Plus®). Further, halogenated flame retardants may be used in combination with synergists like antimony trioxide ($Sb_2O_3$) or 2,3-dimethyl-2,3-diphenyl-butane (Dicumene®).

A biocide is a substance which destroys, deters, renders harmless, or exerts a controlling effect on any harmful organism by chemical or biological means. Suitable biocides include substances based on silver, copper or zinc, which are supplied as salts (zinc pyrithione) or oxides or by loaded zeolites or by nano particles. Further suitable biocides include chitosan, 10,10'-oxybisdphenoxarsine (OBPA), isothiazolinones, 2,4,4'-trichlor-2'-hydroxy-diphenylether (Trichlosan), N-(fluorodichloro-methylthio) phthalimide, thiabendazole (TBZ) or methylthio-cyclopropylamino-tert-butylamino-sym-triazine and synthetic polymers poly(tert-butylaminoethylmethacrylate), poly(tert-butylaminomethylstyrene) and their active copolymers.

Thermoplastic shrink control agents are substances that can be used in sheet molding compound (SMC) and in bulk molding compound (BMC) technology in order to compensate for shrink by forming micro voids in the thermoplastic phase during cure.

Suitable thermoplastic shrink control agents include solid polymers such as powdered polyethylene and liquid solutions in styrene made from thermoplastic polymers such as polystyrene and styrene copolymers, polymethylmethacrylate (PMMA), polyvinylacetate (PVAc) and functionalized PVAc, saturated (non-curable) polyesters and rubbers.

Toughening agents are used to improve the damage tolerance of the cured ethylenically unsaturated polyester

resin composition. In particular, the elongation at break and the impact strength can be enhanced, while crack formation under long term static load and dynamic load can be reduced. Suitable toughening agents include rubbers, nanoparticles, i.e. particles having an average diameter of less than 1 μm or precursors forming such nanoparticles, thermoplastic polymers differing from the ethylenically unsaturated polyester resin (i) and blockcopolymers differing from the ethylenically unsaturated polyester resin (i). Toughening agents may be present in the resin composition in an amount of 2 to 40 wt.%, preferably 3 to 30 wt.%, more preferably 5 to 25 wt.%, relative to the total amount of the ethylenically unsaturated polyester resin composition.

Suitable rubbers include acrylonitrile-butadiene-rubber (NBR), hydrogenated NBR (H-NBR), polychloroprene (CR), styrene-butadiene-rubber (SBR), natural rubber (NR), polyisobutylene (PIB), ethylene-propylene-rubber (EPM), ethylene-propylene-diene-rubber (EPDM) and rubbers based on polyacrylates, acrylate-rubber (AM) and fluororubber and functionalized rubber like carboxy-terminated NBR (CTBN) or epoxy-terminated NBR (ETBN).

Suitable nanoparticles include soot, carbon black (high abrasion furnace, super high abrasion furnace), pyrogenic silicic acid, surface-modified pyrogenic silicic acid, fumed silica, precipitated silica, rigid phase material from polyurethane recycling, modified silica particles by hydrolysis of functionalized silanes, montmorillonite, bentonite and exfoliated montmorillonite.

Suitable thermoplastic polymers differing from the ethylenically unsaturated polyester resin (i) include polysulfone (PSU), polyethersulfone (PES), polyphenylenesulfone (PPSU), polyoxy-2,6-dimethyl-1,4-phenylene (PPE), polycarbonate based on bisphenol A and bisphenol TMC (APEC HT®), copolymers of styrene and maleic anhydride (XIRAN®), copolymers of styrene and maleic anhydride and N-phenyl-maleinimide (XIRAN®), copolymers from styrene and glycidylmethacrylate, copolymer from styrene and acrylonitrile (SAN), copolymer from styrene, butadiene and acrylonitrile (ABS), copolymer from styrene, acrylate monomer and acrylonitrile (ASA), copolymers from acrylonitrile and α-methyl-styrene (AMSAN), amorphous polyamides, polymethacrylimide, polyvinylidenefluoride (PVDF), polyvinylfluoride (PVF), ethylene-tetrafluoroethylene-copolymer (ETFE) and copolymer from tetrafluoroethylene and hexafluoropropylene.

Suitable blockcopolymers differing from the ethylenically unsaturated polyester resin (i) include styrene-butadiene-styrene blockcopolymers (SBS), polyetheramide blockcopolymers, polyetherester blockcopolymers, thermoplastic polyurethanes (TPU) on the basis of polyesters, polyethers and polycarbonates.

A curing agent is a compound or a mixture of compounds which expedites the curing process.

When curing is conducted at a temperature of between 5 and 45 °C, it may be referred to as "cold curing". Cold curing may be conducted via benzoylperoxides in combination with an amine accelerator; or via hydroperoxides in combination with a metal accelerator.

Suitable benzoyl peroxides include dibenzoyl peroxide and 4,4'-dichloro-dibenzoyl peroxide. Suitable amine accelerators include N,N-dimethylaniline, N,N-diethylaniline, N,N-dimethyltolidine, N,N-diethyltolidine, N,N-bis(2-hydroxyethyl)aniline, N,N-bis(2-hydroxyethyl)-tolidine, N,N-bis(2-hydroxypropyl)-aniline, and/or N,N-bis(2-hydroxypropyl)toluidine.

Suitable hydroperoxides include hydrogenperoxide, tert-butylhydroperoxide, tert-amylhydroperoxide, methyl ethyl ketone-peroxide, cyclohexanone-peroxide, acetylaceton-peroxide, trimethylcyclohexanon-peroxid, iso-butylmethylketon-peroxide. Suitable metal accelerators include organic salts of Co(II), Mn(II), Cu(I), Cu(II) or Fe(II), such as the metal salts of ethylhexanoate or naphthenate.

When curing is conducted at a temperature of above 45 °C and 120 °C, it may be referred to as "thermal curing". Thermal curing can be conducted with one or more thermal initiator agents as curing agents. Suitable thermal initiator agents include peroxides, azo-compounds and C-C labile compounds.

Suitable peroxides include methyl ethyl ketone peroxide, 2,4-pentanedione peroxide, methyl isobutyl ketone peroxide, cyclohexanone peroxide, dibenzoyl peroxide, tert-butyl peroxyneodecanoate, 2,5-dimethyl-2,5-di-(2-ethylhexanoylperoxy)hexane, tert-amyl peroxy-2-ethylhexanoate, tert-butyl peroxy-2-ethylhexanoate, tert-butyl peroxy-3,5,5-trimethylhexanoate, tert-butyl peroxy-2-methylbenzoate, tert-butylperoxy 2-ethylhexyl carbonate, tert-butylperoxy isopropyl carbonate, tert-amyl peroxybenzoate, tert-butyl peroxybenzoate, 1,1-di-(tert-amylperoxy) cyclohexane, 1,1-di-(tert-butylperoxy)-3,3,5-trimethyl-cyclohexane, 1,1-di-(tert-butylperoxy)-cyclohexane, 2,2-di-(tert-amylperoxy)butane, n-butyl 4,4-di-(tert-butylperoxy)valerate, dilauroyl peroxide, di-(2-tert-butylperoxyisopropyl)benzene, dicumyl peroxide, 2,5-dimethyl-2,5-di-(tert-butylperoxy)hexane, di-tert-butyl peroxide, di-tert-amyl peroxide, dicumyl peroxide, di(tert-butylperoxyisopropyl)benzene, 2,5-dimethyl-2,5-di(tert-amyl-peroxy)hexane, tert-butyl cumyl peroxide, 2,5-dimethyl-2,5-di(tert-butylperoxy)hexyne-3, 3,6,9-triethyl-3,6,9-trimethyl-1,4,7-triperoxocyclononane, di-(4-tert-butylcyclohexyl) peroxydicarbonate, di-(2-ethylhexyl) peroxydicarbonate, tert-butyl hydroperoxide, cumyl hydroperoxide, isopropylcumyl hydroperoxide, and 1,1,3,3-tetramethylbutyl hydroperoxide.

Suitable azo-compounds include 2,2'-azobis(2-isobutyronitrile), 2,2'-azobis(2-methylbutyronitrile), and 1,1'-azobis(hexahydrobenzo-nitrile).

Suitable C-C labile compounds include 2,3-dimethyl-2,3-diphenylbutane and 3,4-dimethyl-3,4-diphenylhexane.

Further suitable curing agents include compounds which generate radicals when irradiated with UV-A light, i.e.,

light of a wavelength of 315 to 380 nm. Such curing agents may be referred to as photoinitiators. Suitable photoinitiators include derivatives of benzoin, benzil, α-hydroxyketones, α-amino ketones, acylphosphine oxides, bisacylphosphine oxides, or combinations thereof. Preferred photoinitiators include Irgacure® 369, Irgacure® 651, Irgacure® 184, Irgacure® 819, Irgacure® 907 and Lucirin® TPO.

In one embodiment, the ethylenically unsaturated polyester resin composition does not comprise a curing agent.

The invention moreover provides the use of an ethylenically unsaturated polyester resin composition as described above as a matrix polymer for reinforced and non-reinforced thermosets in SMC-technology (sheet molding composite technology), BMC-technology (bulk molding technology), resin transfer molding (RTM), compression molding, hot molding, FCS-technology (fiber composite spraying technology), injection molding, vacuum assisted resin infusion, continuous sheet production, filament winding, rotation molding, lamination, vacuum-pressure-impregnation (VPI-process), pultrusion, casting, bundling, bonding, coating such as gel coating, top coating, spray coating, filling, inmold coating, knife-coating, dipping, dropping, painting, wire painting (enamel coating), fiber spinning and foaming.

The invention further provides a thermoset obtainable by curing the ethylenically unsaturated polyester resin composition of the invention. The above discussion and embodiments regarding the inventive composition are understood to likewise apply to the inventive thermoset.

In a preferred embodiment, curing is performed by radical polymerization via a curing agent. Suitable curing agents are described above. Alternatively, curing can be performed in the absence of a curing agent.

The curing may be carried out by means of high-energy radiation. Examples for high-energy radiation suitable for curing are electron radiation, or α-, β-, or γ-radiation, preferably γ-radiation.

The curing of the unsaturated ethylenically unsaturated polyester resin composition is preferably performed at an elevated temperature, preferably in the range of 120 to 250 °C. The temperature may be raised stepwise during the curing process.

In a preferred embodiment, the curing of the unsaturated polyester resin composition is conducted at a temperature in the range of 15 to 50 °C for 2 to 200 hours and afterwards at 80 to 120 °C for 2 to 24 hours.

In one embodiment, the cured unsaturated polyester resin composition is further subjected to a post-curing process. The duration of the post-curing is preferably 1 to 12 hours. Post-curing is preferably carried out at a temperature of 80 to 200 °C, in particular at 80 to 150 °C.

The thermoset according to the invention may be used for the production of tanks, polymer concrete, engineered stone, apparatus construction, medical equipment, railroad equipment, oil and gas field equipment, automotive body parts, truck body parts, head lamp reflectors, gelcoats, topcoats, protective layers and other coating applications such as spray coating, inmold coating and painting, putties, cast products, buttons, porous materials (e.g. foams, membranes etc.), production of fibers, production of tools, electronic devices, flame retardant thermosets, profiles, containers, moldings, polymer parts, long field lamp carrier, oil sinks, sheets/plates, railway interior parts, bondings and pipes.

The invention is described in further detail by the subsequent examples.

## Examples

Unsaturated polyester resins were obtained as described below.

The following table provides an overview of the reactants, stabilizers and initiators used in the working examples.

| Material | Manufacturer |
|---|---|
| fumaric acid<br>(99.0%) | ESIM Chemicals |
| itaconic acid<br>(99.0%) | Alfa Aesar GmbH & Co KG |
| maleic anhydride | BASF |
| phthalic anhydride | Thermo Scientific Acros |
| tetrahydrophthalic anhydride | Merck KGaA |
| ethylene glycol(99.5%) | VWR International S.A.S. |
| diethylene glycol | Möller Chemie GmbH & Co. KG |
| propylene glycol(99.0%) | chemiekontor.de GmbH |
| 1,3-butanediol(99.0%) | Alfa Aesar GmbH & Co KG |
| neopentyl glycol | BASF |

(continued)

| Material | Manufacturer |
|---|---|
| isosorbide<br>(98.0%, Sorbon® P) | Deutsche Hydrierwerke GmbH Rodleben |
| hydroquinone<br>(99.5%) | ACROS Organics |
| butylstannoic acid<br>(95.0%, Fascat® 4100) | Thermo Fisher (Kandel) GmbH |
| Styrene<br>(99.7%) | Möller Chemie GmbH & Co. KG |
| 5-methyl-3-vinyl-oxazolidin-2-one (> 94.0%, VMOX®, comprising about 4% of 4-methyl-3-vinyl-oxazolidin-2-one) | BASF |
| Tinuvin® 765 (mixture of bis(1,2,2,6,6-pentamethyl-4-piperidyl)sebacate and methyl 1,2,2,6,6-pentamethyl-4-piperidyl sebacate) | BASF |
| tert-Butyl peroxybenzoate<br>(98.0 %) | ACROS Organics™ Thermo Scientific Acros |

A. Production of Unsaturated Polyester Resins

Unsaturated polyester resins were obtained by reacting at (i-a) at least one ethylenically unsaturated dicarboxylic acid, or an ester or an anhydride thereof, and (i-b) at least one polyol in the molar ratios specified in the table below. The unsaturated polyester resins were prepared by melt polycondensation.

A four-neck flask (2L) was provided. In the middle neck, a stirrer with a single blade was mounted. The bearing casing of the stirrer was constantly cooled with water. On the three other necks, a thermocouple, an insulated packed column and a plug were provided. A distillation bridge with a ground-joint thermometer was mounted on the column so as to monitor the head temperature of the system during polycondensation. A graduated cylinder (250 mL) was attached to the distillation bridge to collect and measure the amount of condensed water. The thermocouple was connected to a Julabo laboratory controller (PID) and controlled the reactor temperature via a computer program (JULABO EasyTemp Professional). A heating mantle, which was also controlled by the Julabo laboratory controller, served as the heating source.

At the beginning of the reaction 500 ppmw of hydroquinone, relative to the total reaction mixture, were added as a free radical scavenger. As esterification catalyst, 400 ppmw of Fascat 4100 (butyltinic acid), relative to the total reaction mixture, were added at 140 °C. The reaction was carried out under nitrogen atmosphere (99.999% nitrogen) in a four-neck flask (2 L) with a stirrer and a thermometer.

Heating from room temperature to 135 °C was carried out via program control, as fast as possible while avoiding overheating. At 135 to 145°C, the first formation of water was observed. The reaction temperature was increased by 10 °C per hour in the range of 135 to 185°C. Once the melt of the unsaturated polyester reached 185°C, the reaction was stopped. The polymer was cooled and then left in its solid form overnight.

Subsequently, the polymer was melted again by heating to 185 °C. 400 ppmw of Fascat 4100, relative to the total reaction mixture, were added at 140 °C. The reaction was carried out until the viscosity of the unsaturated polyester increased significantly and the torque of the stirrer motor reached 2 Ncm or the required acid value was achieved, which was checked in regular intervals. Subsequently, the unsaturated polyester was poured into a shallow rectangular mold, where it cooled and solidified.

The acid value (neutralization number) is the mass of potassium hydroxide (KOH) in milligrams required to neutralize one gram of the ethylenically unsaturated resin. The acid value indicates the number of carboxylic acid groups per gram of compound and was determined via titration according to DIN EN ISO 2114.

The glass-transition temperature $T_g$ of ethylenically unsaturated polyester resins was determined via Differential Scanning Calorimetry (DSC). The DSC measurements were carried out using a DSC device Sirius 3500 from Netzsch. Hermetically sealable Tzero aluminium pans were used. For the DSC measurement, about 15 mg of unsaturated polyester resin were added to a Tzero pan. The Tzero lid was then placed on the pan and sealed with the help of a press, the pan was inserted into the DSC and the measurement was started.

For the measurement, the pans were first cooled to 0 °C, then the pans were heated up to 100 °C at 10 K/min. The above step was then repeated a second time so that two cycles were measured. The $T_g$ was determined from the second cycle.

The mass-average molecular weight $M_w$ and the number-average molecular weight $M_n$ were determined by gel

permeation chromatography, in particular using styrenedivinylbenzene copolymer as a stationary phase and tetrahydrofuran (THF) as an eluent, and calibration using polystyrene of defined molecular weight. Gel permeation chromatography can be carried out using a SECcurity GPC Systems apparatus from PSS Polymer Standard Solution. The polydispersity index Q was calculated as $M_w$ / $M_n$.

In particular, an analytical column from PSS Polymer Standard Solution was used as the separation column. The stationary phase consisted of styrene-divenylbenzene copolymer (SDV) with a particle size of 3 µm and a nominal pore size of 100 Å. The eluent was tetrahydrofuran (THF). The separation column was tempered to 35 °C in the column oven. The injected sample volume was 50 µL at a sample concentration of 4.94 g/L, which in sample preparation corresponds to 50 mg sample to 9 g eluent. The flow rate of the eluent was 0.5 mL/min. The samples were detected with a refractive index detector and a UV-vis detector, with the measurement signal being registered every second. Two GPC measurement series were carried out for each polyester. The chromatograms were evaluated using PSS WinGPC UniChrom software. Calibration was carried out with a suitable standard kit of styrene oligomers and polymers.

The melt viscosity was determined according to the table below at 100 °C or 150 °C via an ICI - Cone-Plate viscosimeter from Epprecht Control & Instrument (FIC). A standard cone C (Ø = 19.5 mm, cone angle 0.5°) was used for the measurements. Approximately 0.5 g of the solid unsaturated polyester resins were used for the measurements.

The following table shows the properties of the unsaturated polyester resins.

| # | Unsaturated Polyester Resin (molar ratio of reactants) | Acid Value | $T_G$ [°C] | $M_n$ [g/mol] | $M_w$ [g/mol] | Q * | $T_v$ ** [°C] | Shear Rate [$s^{-1}$] | viscosity [mPa·s] |
|---|---|---|---|---|---|---|---|---|---|
| 1 | fumaric acid - isosorbide (1.0 : 1.05) | 23.0 | 55.5 | 800 | 2500 | 3.1 | 150 | 313 | 12800 |
| 2 | itaconic acid - isosorbide (1.0 : 1.05) | n.m.* | 84 | 370 | 890 | 2.4 | 100 | 2500 | 1750 |
| 3 | maleic anhydride - isosorbide (1.0 : 1.05) | n.m.* | 58.9 | 500 | 2300 | 4.6 | 150 | 625 | 8500 |
| 4 | fumaric acid - itaconic acid - isosorbide (0.5 : 0.5 : 1.05) | n.m.* | 38.8 | 550 | 1700 | 3.1 | 150 | 2500 | 1200 |
| 5 | fumaric acid - isosorbide - neopentyl glycol (1.0 : 0.84 : 0.21) | 45.0 | 32.9 | 540 | 2400 | 4.4 | 150 | 1250 | 2900 |
| 6 | fumaric acid - isosorbide - 1,3-butanediol (1.0 : 0.84 : 0.21) | 42.0 | 52.9 | 900 | 3000 | 3.3 | 150 | 625 | 11900 |
| 7 | fumaric acid - isosorbide - 1,3-butanediol (1.0 : 0.525 : 0.525) | 28.0 | 33.4 | 1000 | 4400 | 4.4 | 150 | 2500 | 2500 |
| 8 | fumaric acid - isosorbide - propylene glycol (1.0 : 0.84 : 0.21) | 30.0 | 73.9 | 600 | 3500 | 5.8 | 150 | 313 | 21700 |
| 9 | fumaric acid - isosorbide - propylene glycol (1.0 : 0.525 : 0.525) | 26.5 | 58.3 | 700 | 6500 | 9.3 | 150 | 625 | 11600 |
| 10 | fumaric acid - isosorbide - ethylene glycol (1.0 : 0.84 : 0.21) | n.m. | 68.5 | 1400 | 3000 | 2.1 | 150 | 313 | 17100 |
| 11 | fumaric acid - isosorbide - ethylene glycol (1.0 : 0.525 : 0.525) | 30.0 | 47.4 | 700 | 1000 | 1.4 | 100 | 10000 | 130 |
| 12 | fumaric acid - 1,3-butanediol (1.0 : 1.05) | 35.0 | -3.9 | 2100 | 4700 | 2.2 | 150 | 10000 | 310 |
| 13 | fumaric acid - isosorbide - 1,3-butanediol 6:2:4 (1.0 : 0.35 : 0.70) | 23.0 | 17.6 | 2300 | 6300 | 2.7 | 150 | 2500 | 1900 |
| 14 | fumaric acid - 2-methyl-2-propylpropane-1,3-diol (1.0 : 1.02) | 16 | 16.1 | 4600 | 14700 | 3.2 | 150 | 1250 | 4880 |
| 15 | maleic anhydride - phthalic anhydride - propylene glycol (1.0 : 2.0 : 3.3) | 45 | 9.5 | 570 | 1500 | 2.6 | 150 | 10000 | 130 |

(continued)

| # | Unsaturated Polyester Resin (molar ratio of reactants) | Acid Value | $T_G$ [°C] | $M_n$ [g/mol] | $M_w$ [g/mol] | Q * | $T_v$ ** [°C] | Shear Rate [$s^{-1}$] | viscosity [mPa·s] |
|---|---|---|---|---|---|---|---|---|---|
| 16 | maleic anhydride - phthalic anhydride - propylene glycol (1.0 : 0.5 : 1.65) | 35 | 11.1 | 950 | 2600 | 2.7 | 150 | 10000 | 140 |
| 17 | maleic anhydride - propylene glycol - neopentyl glycol (1.0 : 0.93 : 0.20) | 25 | 1.2 | 2200 | 5650 | 2.6 | 150 | 10000 | 217 |
| 18 | maleic anhydride - tetrahydrophthalic anhydride - diethylene glycol (1.0 : 0.5 :1.59) | 46 | -25.7 | 800 | 2100 | 2.6 | 100 | 10000 | 220 |

n.m. = not measured
* Q = polydispersity index
** $T_V$ = temperature at which the viscosity measurement was conducted

B. Prediction of the Hansen Solubility Parameters of the Unsaturated Polyester Resins

The Hansen Parameters of the unsaturated polyester resins were predicted on the basis of the corresponding oligomers using the software COSMOquick 2021. First, the molecules were drawn as 12-mer oligomers in the included JChemPaint module. Then, the corresponding SMILES strings were generated. Finally, quantitative structure-activity relationship (QSPR) models were used to obtain the Hansen Solubility Parameters. The QSPR results were fitted to empirical published Hansen values ("Hansen Solubility Parameters: A User's Handbook", C. M. Hansen, 2007, 2nd Edition, CRC). The results are shown in the table below.

C1. Production of Ethylenically Unsaturated Polyester Resin Compositions

The solidified unsaturated polyester resins obtained according to item A were crushed using a hammer. If the unsaturated polyester resins did not solidify at room temperature, they were cooled with liquid nitrogen and then crushed in cold state. The crushed polyester resins were used to produce the unsaturated polyester resin composition. First, the unsaturated polyester resin particles were weighed into glass bottles. Subsequently, the reactive diluent was added in an amount of 70 wt.-% of the total composition, followed by Tinuvin® 765 (BASF, 1,000 ppmw).

The bottles were placed on a roller mixer. The solubility or the progress of the dissolution process of the unsaturated polyester resin particles in the reactive diluent was visually checked at regular intervals. The resin compositions were considered ready for use as soon as everything was dissolved. The results of the solubility tests are shown in the table below.

| # | Unsaturated Polyester Resin (molar ratio of reactants) | Hansen Solubility Parameter [$MPa^{1/2}$] | | | Solubility in Styrene | Solubility in VMOX |
|---|---|---|---|---|---|---|
| | | $\delta_p$ | $\delta_d$ | $\delta_h$ | | |
| 1 | fumaric acid - isosorbide (1.0 : 1.05) | 6.525 | 18.826 | 15.737 | insoluble | clear solution |
| 2 | itaconic acid - isosorbide (1.0 : 1.05) | 8.105 | 18.556 | 17.559 | insoluble | clear solution |
| 3 | maleic anhydride - isosorbide (1.0 : 1.05) | 6.525 | 18.826 | 15.737 | insoluble | clear solution |
| 4 | fumaric acid - itaconic acid - isosorbide (0.5 : 0.5 : 1.05) | 8.160 | 18.368 | 17.188 | insoluble | clear solution |
| 5 | fumaric acid - isosorbide - neopentyl glycol (1.0 : 0.84 : 0.21) | 8.175 | 18.224 | 17.723 | insoluble | clear solution |

(continued)

| # | Unsaturated Polyester Resin (molar ratio of reactants) | Hansen Solubility Parameter [MPa$^{1/2}$] | | | Solubility in Styrene | Solubility in VMOX |
|---|---|---|---|---|---|---|
| | | $\delta_p$ | $\delta_d$ | $\delta_h$ | | |
| 6 | fumaric acid - isosorbide - 1,3-butanediol (1.0 : 0.84 : 0.21) | 8.108 | 18.369 | 17.473 | insoluble | clear solution |
| 7 | fumaric acid - isosorbide - 1,3-butanediol (1.0 : 0.525 : 0.525) | 6.590 | 17.931 | 15.886 | insoluble | clear solution |
| 8 | fumaric acid - isosorbide - propylene glycol (1.0 : 0.84 : 0.21) | 8.153 | 18.373 | 17.532 | insoluble | clear solution |
| 9 | fumaric acid - isosorbide - propylene glycol (1.0 : 0.525 : 0.525) | 6.639 | 17.950 | 15.375 | insoluble | clear solution |
| 10 | fumaric acid - isosorbide - ethylene glycol (1.0 : 0.84 : 0.21) | 8.094 | 18.529 | 17.532 | insoluble | clear solution |
| 11 | fumaric acid - isosorbide - ethylene glycol (1.0 : 0.525 : 0.525) | 6.534 | 18.108 | 16.081 | insoluble | clear solution |
| 12 * | fumaric acid - 1,3-butanediol (1.0 : 1.05) | 4.209 | 16.495 | 15.033 | clear solution | clear solution |
| 13 * | fumaric acid - isosorbide - 1,3-butanediol 6:2:4 (1.0 : 0.35 : 0.70) | 5.32 | 17.818 | 15.294 | clear solution | clear solution |
| 14 | fumaric acid - 2-methyl-2-propylpropane-1,3-diol (1.0 : 1.02) ** | 5.702 | 16.884 | 15.476 | turbid solution | clear solution |
| 15 * | maleic anhydride - phthalic anhydride - propylene glycol (1.0 : 2.0 : 3.3) | 5.019 | 17.527 | 14.101 | clear solution | clear solution |
| 16 * | maleic anhydride - phthalic anhydride - propylene glycol (1.0 : 0.5 : 1.65) | 4.735 | 17.381 | 14.263 | clear solution | clear solution |
| 17 * | maleic anhydride - propylene glycol - neopentyl glycol (1.0 : 0.93 : 0.20) | 4.162 | 16.345 | 9.130 | clear solution | clear solution |
| 18 | maleic anhydride - tetrahydrophthalic anhydride - diethylene glycol (1.0 : 0.5 :1.59) | 6.006 | 17.908 | 15.614 | clear solution | clear solution |
| * comparative example<br>** did not comprise stabilizer Tinuvin® 765 | | | | | | |

It is evident that the inventive reactive diluent allows for a high solubility of ethylenically unsaturated polyester resins having a Hansen solubility parameter $\delta_p$ of at least 5.5 MPa$^{1/2}$, whereas the same resins are generally insoluble in styrene.

C2. Production of Further Ethylenically Unsaturated Polyester Resin Compositions

A polyester obtained from fumaric acid and 2-methyl-2-propylpropane-1,3-diol (molar ratio 1.0: 1.02, $\delta_p$ = 5.702 MPa$^{1/2}$) in accordance with resin 14 of item A was cooled with liquid nitrogen and then crushed in cold state. The crushed polyester was used to produce unsaturated polyester resin composition. First, the unsaturated polyester particles were weighed into glass bottles. Subsequently, a mixture of styrene and VMOX as well as stabilizer were added according to the tables below.

The bottles were placed on a roller mixer. The solubility or the progress of the dissolution process of the unsaturated polyester particles in the reactive diluent was visually checked at regular intervals. The resin compositions were considered ready for use as soon as everything was dissolved.

The results of the solubility tests are shown in the tables below. In order to determine the Hansen solubility parameters of the mixture of styrene and VMOX the mass fractions were converted into volume fractions by using the following formula:

$$\varphi_1 = \frac{\left(\frac{\omega_1}{\rho_1}\right)}{\left(\frac{\omega_1}{\rho_1}\right) + \left(\frac{\omega_2}{\rho_2}\right)}$$

wherein $\varphi_1$ is the volume fraction of component 1, $\omega_1$ is the mass fraction of component 1, $\omega_2$ is the mass fraction of component 2, $\rho_1$ is the density of component 1 and $\rho_2$ is the density of component 2. The density of styrene is 0.909 kg/m$^3$. The density of VMOX is 1.098 kg/m$^3$.

The Hansen solubility parameters of the mixture of styrene and VMOX in comparison to the Hansen solubility parameters of the unsaturated polyester resins were used to determine the $R_a$ value according to the following formula:

$$R_a = \sqrt{4 \cdot (\delta_{D1} - \delta_{D2})^2 + (\delta_{P1} - \delta_{P2})^2 + (\delta_{H1} - \delta_{H2})^2}$$

| Mixture of Reactive Diluents | | Hansen Solubility Parameter of Mixture of Reactive Diluents [MPa$^{1/2}$] | | | $R_a$ for Mixture of Reactive Diluents | Solubility in Mixture of Reactive Diluents |
|---|---|---|---|---|---|---|
| Styrene [wt.%] | VMOX [wt.%] | $\delta_d$ | $\delta_p$ | $\delta_h$ | | |
| 70 | 0 | 18.600 | 1.000 | 4.100 | 12.779 | Turbid solution |
| 69 | 1 | 18.592 | 1.095 | 4.121 | 12.721 | Clear solution |
| 68 | 2 | 18.583 | 1.190 | 4.143 | 12.663 | Clear solution |
| 67 | 3 | 18.575 | 1.286 | 4.164 | 12.605 | Clear solution |
| 66 | 4 | 18.567 | 1.382 | 4.186 | 12.548 | Clear solution |
| 65 | 5 | 18.558 | 1.479 | 4.208 | 12.491 | Clear solution |
| 60 | 10 | 18.515 | 1.970 | 4.318 | 12.209 | Clear solution |
| 50 | 20 | 18.426 | 2.990 | 4.548 | 11.675 | Clear solution |
| 40 | 30 | 18.332 | 4.064 | 4.789 | 11.193 | Clear solution |

| Reactive Diluents | | Hansen Solubility Parameter of Mixture of Reactive Diluents [MPa$^{1/2}$] | | | $R_a$ for Mixture of Reactive Diluents | Solubility in Mixture of Reactive Diluents |
|---|---|---|---|---|---|---|
| Styrene [wt.%] | VMOX [wt.%] | $\delta_d$ | $\delta_p$ | $\delta_h$ | | |
| 60 | 0 | 18.600 | 1.000 | 4.100 | 12.779 | Turbid solution |
| 59 | 1 | 18.590 | 1.111 | 4.125 | 12.711 | Turbid solution |
| 58 | 2 | 18.581 | 1.222 | 4.150 | 12.644 | Clear solution |
| 57 | 3 | 18.571 | 1.334 | 4.175 | 12.577 | Clear solution |
| 56 | 4 | 18.561 | 1.447 | 4.200 | 12.510 | Clear solution |
| 55 | 5 | 18.551 | 1.560 | 4.226 | 12.443 | Clear solution |
| 50 | 10 | 18.501 | 2.136 | 4.356 | 12.117 | Clear solution |
| 40 | 20 | 18.395 | 3.342 | 4.627 | 11.507 | Clear solution |
| 30 | 30 | 18.283 | 4.623 | 4.915 | 10.978 | Clear solution |

It is evident that the presence of even small amounts of VMOX improves the solubility of the examined polyester resin in comparison to pure styrene.

D. Production of Composite Fiber Materials

Glass fiber reinforced test specimens were fabricated using the resin compositions of item C1, comprising 70 wt.-

% of VMOX. As a first step, tert-butyl peroxybenzoate (Acros Organics, 98%) was added to the resin in an amount of 1 wt.-%. Then, approximately 10 g of the resin were placed in a metal dish (diameter: 10 cm; depth: 1 cm). The resin was evenly distributed, and a layer of biaxial fiberglass fabric (831 g/m$^2$, 0°/90°, item number S14EB490-00831-01300-474000 from Saertex) of the same diameter was placed in the resin. Once all air bubbles had been removed using a wooden spatula, the second layer of resin was added. A second fiberglass fabric layer was placed at an angle of 90° to the first layer and also wetted with resin. This process was repeated once again so that the metal dish contained three layers of glass fiber at 90° to each other and about 30 g of resin composition.

The obtained specimen was weighted down with a weight (about 500 grams) wrapped in aluminum foil so as to squeeze excess resin composition out of the mold and so as to obtain a smooth specimen surface. Finally, the specimen and weight were wrapped in aluminum foil. The specimen was thermally cured for 1 h at 100 °C and for 1 h at 160 °C in a laboratory oven under air. After cooling, the obtained composite fiber material was broken out of its mold and cut into samples of 10 × 50 mm using a table saw.

Subsequently, the samples were subjected to Dynamic Mechanical Analysis (DMA) using a DMA 242 C from Netzsch. A three-point bending specimen holder was used. The samples were measured according to the method specified in the table below, under a nitrogen flow of 83 mL/min. The dependencies of storage modulus, loss modulus and loss factor (tan $\delta$) of the cured ethylenically unsaturated polyester resin compositions on temperature were determined. The maximum value of the tan $\delta$ curve (T) was considered to constitute the glass transition temperature $T_G$.

| | | |
|---|---|---|
| temperature program | Start | |
| | temperature | 30 °C |
| | frequency | 5.00 Hz |
| | Dynamic Load | |
| | temperature | 250 °C |
| | heating rate | 2.0 K/min |
| | frequency | 10.00 Hz |
| mechanical parameters | proportionality | 1.1 |
| | maximum amplitude | 30.00 μm |
| | maximum dynamic force on the sample | 7.2 N |

The glass transition temperatures of the composite fiber materials are shown in the following table.

| # | Unsaturated Polyester Resin (molar ratio of reactants) | $T_G$ [°C] |
|---|---|---|
| 1 | fumaric acid - isosorbide (1.0 : 1.05) | 209 |
| 2 | itaconic acid - isosorbide (1.0: 1.05) | not measurable |
| 3 | maleic anhydride - isosorbide (1.0 : 1.05) | 177 |
| 4 | fumaric acid - itaconic acid - isosorbide (0.5 : 0.5 : 1.05) | not measurable |
| 5 | fumaric acid - isosorbide - neopentyl glycol (1.0 : 0.84 : 0.21) | 200 |
| 6 | fumaric acid - isosorbide - 1,3-butanediol (1.0 : 0.84 : 0.21) | 203 |
| 7 | fumaric acid - isosorbide - 1,3-butanediol (1.0 : 0.525 : 0.525) | 207 |
| 8 | fumaric acid - isosorbide - propylene glycol (1.0 : 0.84 : 0.21) | 196 |
| 9 | fumaric acid - isosorbide - propylene glycol (1.0 : 0.525 : 0.525) | 185 |
| 10 | fumaric acid - isosorbide - ethylene glycol (1.0 : 0.84 : 0.21) | 189 |
| 11 | fumaric acid - isosorbide - ethylene glycol (1.0 : 0.525 : 0.525) | 160 |
| 12 * | fumaric acid - 1,3-butanediol (1.0 : 1.05) | 185 |
| 13 * | fumaric acid - isosorbide - 1,3-butanediol 6:2:4 (1.0 : 0.35 : 0.70) | 193 |
| 14 | fumaric acid - 2-Methyl-2-propylpropane-1,3-diol (1.0 : 1.02) ** | 190 |
| 15 * | maleic anhydride - phthalic anhydride - propylene glycol (1.0 : 2.0 : 3.3) | 144 |

(continued)

| # | Unsaturated Polyester Resin (molar ratio of reactants) | $T_G$ [°C] |
|---|---|---|
| 16 * | maleic anhydride - phthalic anhydride - propylene glycol (1.0 : 0.5 : 1.65) | 166 |
| 17 * | maleic anhydride - propylene glycol - neopentyl glycol (1.0 : 0.93 : 0.20) | 195 |
| 18 | maleic anhydride - tetrahydrophthalic anhydride - diethylene glycol (1.0 : 0.5 :1.59) | 142 |
| * comparative example<br>** did not comprise stabilizer Tinuvin® 765 | | |

**Claims**

1. An ethylenically unsaturated polyester resin composition comprising

(i) an ethylenically unsaturated polyester resin obtainable by reacting

(i-a) at least one unsaturated dicarboxylic acid, or an ester or an anhydride thereof, wherein the unsaturated dicarboxylic acid comprises at least one ethylenically unsaturated dicarboxylic acid; and
(i-b) at least one polyol; and

(ii) a reactive diluent, which is an N-vinyloxazolidinone of formula (I)

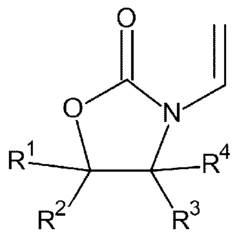

(I)

in which $R^1$, $R^2$, $R^3$ and $R^4$ are independently from one another selected from a hydrogen atom and an organic moiety comprising 1 to 10 carbon atoms;

wherein the ethylenically unsaturated polyester resin (i) is **characterized by** a Hansen solubility parameter $\delta_p$ of at least 5.5 $MPa^{1/2}$.

2. The composition according to claim 1, wherein

- at least two of $R^1$, $R^2$, $R^3$ and $R^4$, for example each of $R^1$, $R^2$, $R^3$ and $R^4$, are a hydrogen atom; or
- each of $R^1$, $R^2$, $R^3$ and $R^4$ is a hydrogen atom; or
- $R^1$ is a $C_1$-$C_4$ alkyl group and $R^2$, $R^3$ and $R^4$ are a hydrogen atom; or
- $R^4$ is a $C_1$-$C_4$ alkyl group and $R^1$, $R^2$ and $R^3$ are a hydrogen atom; or
- $R^1$ and $R^2$ are a hydrogen atom and $R^3$ and $R^4$ are a $C_1$-$C_4$ alkyl group.

3. The composition according to any one of the preceding claims, wherein the N-vinyloxazolidinone of formula (I) is 3-vinyloxazolidin-2-one, 4-methyl-3-vinyl-oxazolidin-2-one or 5-methyl-3-vinyl-oxazolidin-2-one, in particular 5-methyl-3-vinyl-oxazolidin-2-one.

4. The composition according to any one of the preceding claims, wherein the ethylenically unsaturated dicarboxylic acid is an aliphatic dicarboxylic acid bearing an ethylenically unsaturated double bond and having 4 to 8 carbon atoms.

5. The composition according to any one of the preceding claims, wherein the compound (i-a) is selected from maleic acid, maleic anhydride, fumaric acid, fumaric acid dimethyl ester, itaconic acid, itaconic acid dimethyl ester, mesaconic acid, citraconic acid, and tetrahydrophthalic anhydride.

6. The composition according to any one of claims 1 to 4, wherein the compound (i-a) is a combination comprising at last one compound selected from maleic acid, maleic anhydride, fumaric acid, fumaric acid dimethyl ester, itaconic acid, itaconic acid dimethyl ester, mesaconic acid, citraconic acid, and tetrahydrophthalic anhydride; and at least one compound selected from phthalic acid, phthalic anhydride, isophthalic acid, terephthalic acid, dimethylterephthalate, 2,5-furanedicarboxylic acid and 2,5-furanedicarboxylic-dimethylester.

7. The composition according to any one of the preceding claims, wherein the polyol (i-b) is a heterocyclic polyol, in particular isosorbide.

8. The composition according to any one of the preceding claims, wherein the ethylenically unsaturated polyester resin (i) is obtainable by reacting compounds (i-a) and (i-b) in a molar ratio in the range of 1.2 : 1 to 1 : 1.2.

9. The composition according to any one of the preceding claims, wherein the ethylenically unsaturated polyester resin (i) has a number average molecular weight in the range of 500 to 10,000 g/mol, as determined by gel permeation chromatography.

10. The composition according to any one of the preceding claims, wherein the ethylenically unsaturated polyester resin (i) has an acid value in the range of 5 to 80 mg KOH/g.

11. The composition according to any one of the preceding claims, comprising the ethylenically unsaturated polyester resin (i) in an amount of 15 to 85 wt.-% based on the total weight of the ethylenically unsaturated polyester resin composition, preferably 15 to 75 wt.-%, more preferably 20 to 60 wt.-%.

12. The composition according to any one of the preceding claims, comprising the reactive diluent (ii) in an amount of 0.5 to 85 wt.-%, based on the total weight of the ethylenically unsaturated polyester resin composition.

13. The composition according to any one of the preceding claims, further comprising a stabilizer.

14. Use of an ethylenically unsaturated polyester resin composition according to any one of the preceding claims for reinforced and non-reinforced thermosets in SMC-technology (sheet molding composite technology), BMC-technology (bulk molding technology), resin transfer molding (RTM), compression molding, hot molding, FCS-technology (fiber composite spraying technology), injection molding, vacuum assisted resin infusion, continuous sheet production, filament winding, rotation molding, lamination, vacuum-pressure-impregnation (VPI-process), pultrusion, casting, bundling, bonding, coating such as gel coating, top coating, spray coating, filling, inmold coating, knife-coating, dipping, dropping, painting, wire painting (enamel coating), fiber spinning and foaming.

15. A thermoset obtainable by curing the ethylenically unsaturated polyester resin composition of any one of claims 1 to 13.

## Patentansprüche

1. Eine ethylenisch ungesättigte Polyesterharz-Zusammensetzung, die aus

    (i) ein ethylenisch ungesättigtes Polyesterharz, das durch Reaktion gewonnen werden kann

        (i-a) mindestens eine ungesättigte Dicarboxylsäure oder einen Ester oder ein Anhydrid davon, wobei die ungesättigte Dicarboxylsäure mindestens eine ethylenisch ungesättigte Dicarboxylsäure enthält;
        und
        (i-b) mindestens ein Polyol; und

    (ii) ein reaktives Verdünnermittel, das ein N-Vinyloxazolidinon der Formel (I) ist

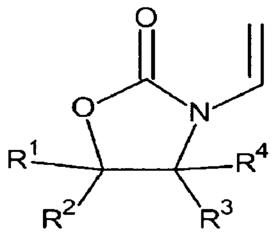

(I)

wobei $R^1$, $R^2$, $R^3$ und $R^4$ unabhängig voneinander ausgewählt werden, basierend auf einem Wasserstoffatom und einer organischen Gruppe, die aus 1 bis 10 Kohlenstoffatomen besteht;

wobei das ethylenisch ungesättigte Polyesterharz (i) durch einen Hansen-Löslichkeitsparameter $\delta_p$ von mindestens 5,5 $MPa^{1/2}$ charakterisiert ist.

**2.** Die Komposition gemäß Anspruch 1, wobei

- mindestens zwei von $R^1$, $R^2$, $R^3$ und $R^4$, zum Beispiel jeweils von $R^1$, $R^2$, $R^3$ und $R^4$, sind Wasserstoffatom; oder
- jedes aus $R^1$, $R^2$, $R^3$ und $R^4$ ist ein Wasserstoffatom; oder
- $R^1$ ist eine $C_1$-$C_4$-Alkylgruppe und $R^2$, $R^3$ und $R^4$ sind ein Wasserstoffatom; oder
- $R^4$ ist eine $C_1$-$C_4$-Alkylgruppe und $R^1$, $R^2$ und $R^3$ sind Wasserstoffatome; oder
- $R^1$ und $R^2$ sind Wasserstoffatome und $R^3$ und $R^4$ sind eine $C_1$-$C_4$-Alkylgruppe.

**3.** Die Zusammensetzung gemäß einer der vorangegangenen Ansprüche, wobei die N-Vinyloxazolidinon der Formel (I) ist 3-Vinyloxazolidin-2-on, 4-Methyl-3-Vinyl-Oxazolidin-2-on oder 5-Methyl-3-Vinyl-Oxazolidin-2-on, insbesondere 5-Methyl-3-Vinyl-Oxazolidin-2-on.

**4.** Die Zusammensetzung entspricht einer der vorangegangenen Behauptungen, wobei die ethylenisch ungesättigte Dicarboxylsäure eine aliphatische Dicarboxylsäure ist, die eine ethylenisch ungesättigte Doppelbindung besitzt und 4 bis 8 Kohlenstoffatome enthält.

**5.** Die Zusammensetzung entspricht einem der vorangegangenen Ansprüche, wobei die Verbindung (i-a) aus Maleinsäure, Maleinsäureanhydrid, Fumarsäure, Fumarsäuredimethylester, Itaconsäure, Itaconsäure-Dimethylester, Mesakonsäure, Citrakonsäure und Tetrahydrophthalsäureanhydrid ausgewählt wird.

**6.** Die Zusammensetzung gemäß einem der Ansprüche 1 bis 4, wobei der Verbindung (I-A) ist eine Kombination, die schließlich aus einer Verbindung besteht, die aus Maleinsäure, Maleinsäureanhydrid, Fumarsäure, Fumarsäuredimethylester, Itaconsäure, Itaconsäure-Dimethylester, Mesakonsäure, Citrakonsäure und tetrahydrophthalsäureanhydrid; und mindestens eine Verbindung, die aus Phthalsäure, Phthalsäureanhydrid, Isophthalsäure, Terephthalsäure, Dimethylterephthalat, 2,5-Furanedicarboxylsäure und 2,5-Furanedicarboxyl-Dimethylester ausgewählt wird.

**7.** Die Zusammensetzung entspricht einer der vorangegangenen Behauptungen, wobei das Polyol (i-b) ein heterozyklisches Polyol ist, insbesondere ein Isosorbid.

**8.** Die Zusammensetzung gemäß einer der vorangegangenen Behauptungen,

bei der das ethylenisch ungesättigte Polyesterharz (i) durch Reaktion erhalten werden kann Verbindungen (i-a) und (i-b) in einem molaren Verhältnis im Bereich von 1,2 : 1 bis 1 : 1,2.

**9.** Die Zusammensetzung gemäß einer der vorangegangenen Ansprüche,

wobei das ethylenisch ungesättigte Polyesterharz (i) ein durchschnittliches Molekulargewicht im Bereich von 500 bis 10.000 g/mol besitzt, bestimmt durch Gelpermeation Chromatographie.

**10.** Die Zusammensetzung entspricht einer der vorangegangenen Ansprüche, wobei das ethylenisch ungesättigte Polyesterharz (i) einen Säurewert im Bereich von 5 bis 80 mg KOH/g hat.

**11.** Die Zusammensetzung gemäß einer der vorangegangenen Ansprüche, die das ethylenisch ungesättigte Polyesterharz (i) in einer Menge von 15 bis 85 Wt.-% basierend auf dem Gesamtgewicht der ethylenisch ungesättigten Polyesterharz-Zusammensetzung umfasst, vorzugsweise 15 bis 75 Wt.-%, mehr vorzugsweise 20 bis 60 Wt.-%.

**12.** Die Zusammensetzung gemäß einer der vorangegangenen Ansprüche, bestehend aus dem reaktiven Verdünner (ii) in einer Menge von 0,5 bis 85 Wt.-%, basierend auf dem Gesamtgewicht der ethylenisch ungesättigten Polyesterharz-Zusammensetzung.

**13.** Die Zusammensetzung gemäß einer der vorangegangenen Behauptungen, die außerdem einen Stabilisator umfasst.

**14.** Verwendung einer ethylenisch ungesättigten Polyesterharz-Zusammensetzung gemäß einer der vorherigen Ansprüche für verstärkte und nicht verstärkte Thermosets in SMC-

Technologie (Blechgussverbundtechnologie), BMC-Technologie (Massengusstechnologie), Harztransferguss (RTM), Kompressionsguss, Heißguss, FCS-Technologie (Faserverbund-Spritztechnologie), Spritzgießen, vakuumunterstützte Harzinfusion, kontinuierliche Blechproduktion, Filamentwicklung, Rotationsguss, Laminierung, Vakuumdruckimprägnierung (VPI-Prozess), Pultrusion,
Gießen, Bündeln, Verkleben, Beschichtungen wie Gelbeschichtung, Deckschicht, Sprühbeschichtung, Füllung, Inmoldbeschichtung, Messerbeschichtung, Tauchen, Tropfen, Malen, Drahtbemalen (Emailbeschichtung), Faserspinnen und Schäumen.

**15.** Ein Thermoset, das durch Aushärten des ethylenisch ungesättigten Polyesterharzes erhalten werden kann Zusammensetzung eines einzelnen der Ansprüche 1 bis 13.

**Revendications**

**1.** Une composition en résine polyester éthyléniquement insaturée comprenant

(i) une résine polyester éthyléniquement insaturée obtenable par réaction

(i-a) au moins un acide dicarboxylique insaturé, ou un ester ou un anhydride de celui-ci, où l'acide dicarboxylique insaturé comprend au moins un acide dicarboxylique éthyléniquement insaturé ; et
(i-b) au moins un polyol ; et

(ii) un diluant réactif, qui est une N-vinyloxazolidinone de formule (I)

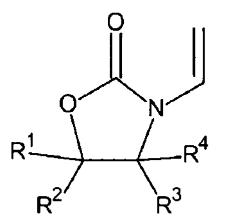

(I)

dans laquelle $R^1$, $R^2$, $R^3$ et $R^4$ sont indépendamment sélectionnés l'un de l'autre, sélectionnés à partir d'un atome d'hydrogène et d'une moitié organique composée de 1 à 10 atomes de carbone ;

où la résine polyester éthyléniquement insaturée (i) est **caractérisée par** un paramètre de solubilité de Hansen $\delta_p$ d'au moins 5,5 $MPa^{1/2}$.

**2.** La composition selon la revendication 1, dans laquelle

- au moins deux des $R^1$, $R^2$, $R^3$ et $R^4$, par exemple chacun des $R^1$, $R^2$, $R^3$ et $R^4$, forment un atome d'hydrogène ; ou
- chacun des $R^1$, $R^2$, $R^3$ et $R^4$ est un atome d'hydrogène ; ou
- $R^1$ est un groupe alkyle $C_1$-$C_4$ et $R^2$, $R^3$ et $R^4$ sont un atome d'hydrogène ; ou

- R4 est un groupe alkyle $C_1$-$C_4$ et $R^1$, $R^2$ et $R^3$ sont un atome d'hydrogène ; ou
- $R^1$ et $R^2$ sont un atome d'hydrogène et $R^3$ et $R^4$ sont un groupe alkyle $C_1$-$C_4$.

**3.** La composition selon l'une des revendications précédentes, dans laquelle la La N-vinyloxazolidinone de la formule (I) est la 3-vinyloxazolidine-2-one, la 4-méthyl-3-vinyl-oxazolidine-2-one ou la 5-méthyl-3-vinyl-oxazolidine-2-one, en particulier la 5-méthyl-3-vinyl-oxazolidine-2-one.

**4.** La composition selon l'une des affirmations précédentes, où l'acide dicarboxylique éthyléniquement insaturé est un acide dicarboxylique aliphatique portant une double liaison éthyléniquement insaturée et possédant de 4 à 8 atomes de carbone.

**5.** La composition selon l'une des revendications précédentes, où le composé (i-a) est sélectionné parmi l'acide maléique, l'anhydride maléique, l'acide fumarique, l'ester diméthylique fumarique, l'acide itaconique, l'ester diméthylique d'acide itaconique, l'acide mésasonique, l'acide citraconique et l'anhydride tétrahydrophtalique.

**6.** La composition selon l'une des revendications 1 à 4, dans laquelle le Le composé (I-A) est une combinaison composée au moins d'un composé sélectionné à partir d'acide maléique, d'anhydride maléique, d'acide fumarique, d'ester diméthylique fumarique, d'acide itaconique, d'acide diméthylique diméthylique, d'acide mésomanique, d'acide citraconique, et

anhydride tétrahydrophtalique ; et au moins un composé sélectionné parmi l'acide phtalique, l'anhydride phtalique, l'acide isophthalique, l'acide térephtalique, le diméthyltérephtalate, l'acide 2,5-furanedicarboxylique et le 2,5-furanedicarboxylique-diméthylester.

**7.** La composition selon l'une des affirmations précédentes, où le polyol (i-b) est un polyol hétérocyclique, en particulier l'isosorbide.

**8.** La composition selon l'une des revendications précédentes, où la résine polyester éthyléniquement insaturée (i) est obtenue par réaction composés (i-a) et (i-b) dans un rapport molaire de l'ordre de 1,2 : 1 à 1 : 1,2.

**9.** La composition selon l'une des affirmations précédentes, où la résine polyester éthyléniquement insaturée (i) a un poids moléculaire moyen compris entre 500 et 10 000 g/mol, déterminé par la perméation du gel Chromatographie.

**10.** La composition selon l'une des affirmations précédentes, où la résine polyester éthyléniquement insaturée (i) a une valeur acide allant de 5 à 80 mg KOH/g.

**11.** La composition selon l'une des revendications précédentes, comprenant la résine polyester éthyléniquement insaturée (i) dans une quantité de 15 à 85 % en poids, selon le poids total de la composition en résine polyester éthyléniquement insaturée, de préférence 15 à 75 % en poids, plutôt de 20 à 60 % en poids.

**12.** La composition selon l'une des revendications précédentes, comprenant le diluant réactif (ii) dans une proportion de 0,5 à 85 % en poids, basée sur le poids total de la composition en résine polyester éthyléniquement insaturée.

**13.** La composition selon l'une des revendications précédentes, comprenant en outre un stabilisateur.

**14.** Utilisation d'une composition en résine polyester éthyléniquement insaturée selon l'une des revendications précédentes pour les thermodurcités renforcées et non renforcées dans SMC-

technologie (technologie composite de moulage de feuilles), technologie BMC (technologie de moulage en vrac), moulage par transfert de résine (RTM), moulage par compression, moulage à chaud, technologie FCS (technologie de pulvérisation en composite de fibre), moulage par injection, infusion assistée par vide de résine, production continue de feuilles, enroulement de filament, moulage par rotation, lamination, imprégnation sous pression sous vide (procédé VPI), pultrusion,

coulage, emballage, collage, revêtement tel que gel coating, top coating, spray coating, remplissage, inmold, knife-coating, trempage, dropping, peinture, peinture sur fil (revêtement émaillé), filage et mousse de fibres.

**15.** Un thermodurcissable obtenu en durcissant la résine polyester éthyléniquement insaturée composition de l'une des revendications 1 à 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3626759 A1
- EP 1131372 B1
- US 4831153 A


### Non-patent literature cited in the description


- **C. M. HANSEN**. The Three Dimensional Solubility parameter and Solvent Diffusion Coefficient - Their Importance in Surface Coating Formulation. Danish Technical Press, 1967
- **C. M. HANSEN**. Hansen Solubility Parameters: A User's Handbook. CRC, 2007